# EUROPEAN PATENT APPLICATION

(11) **EP 0 753 760 A2**
(43) Date of publication of application: **15.01.1997**
(21) Application number: 96305069.5
(22) Date of filing: 10.07.1996
(51) Int. Cl.: G01S 3/00, H04B 10/00

(54) **Infrared pointing type wireless controller**

(30) Priority: 10.07.1995 KR 9520225
(71) Applicant: LG ELECTRONICS INC., Seoul (KR)
(72) Inventor: Kim, Jeong-Yeol, Suwon-si, Kyungki-do (KR); Chwa, Duk-Chin, Ilwon-Dong,Kangnam-ku Seoul (KR)
(74) Representative: Cross, Rupert Edward Blount

(57) **Abstract**

Infrared pointing type wireless controller is disclosed, including a system main body which is an objective of pointing, having transmitting means for generating a carrier frequency signal for emitting an infrared ray, and receiving and controlling means for receiving a reflected carrier signal and a reflected code signal, and calculating coordinates of a pointed position according to a difference of intensities of received infrared signals, for matching the pointed position to a display screen; and, position indicating means with which pointing is performed having re-transmitting means for passing or blocking reflection of the carrier frequency signal transmitted from the transmitting means for generating a required code, and overlapping the code with carrier frequency signal and reflecting the overlapped signal.

## Description

### BACKGROUND OF THE INVENTION

### Field of the Invention

The present invention relates to a wireless controller, and more particularly, to an infrared pointing type wireless controller, in which a carrier frequency signal for use in transmission of a signal is transmitted to a system main body which is an object of the pointing, a handset remote controller controls a reflection of the transmitted carrier frequency signal for producing a required code, and the main body receives a signal reflected from the handset remote controller for determining a pointed position according to intensities of the received signals, for reducing power consumption of the handset remote controller.

### Discussion of Related Art

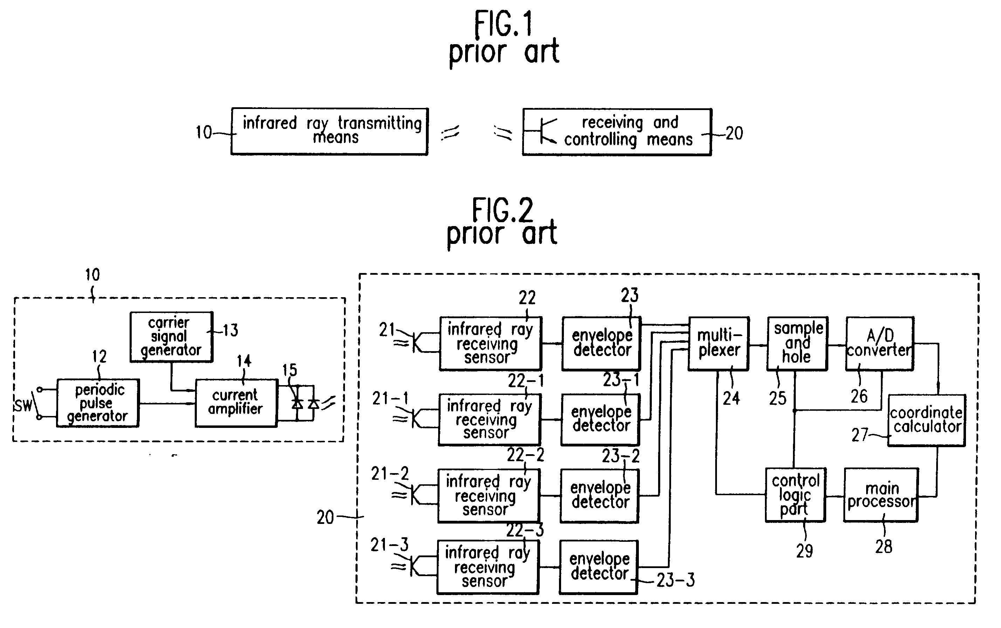

Shown in Figs. 1 ∼ 3 are a conventional infrared pointing type wireless controllers, disclosed by the same inventor in Korea under the same title with this application, with an application No. 92-12672.

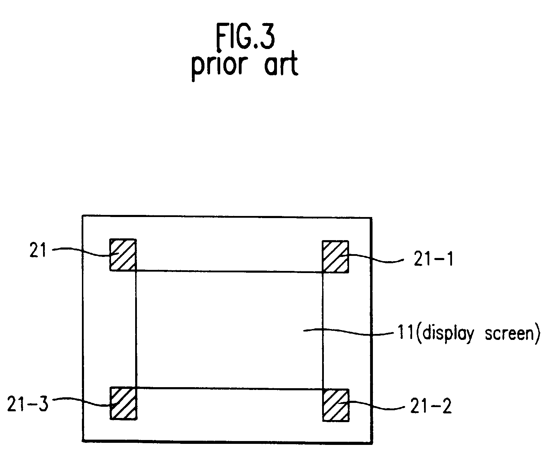

Fig. 1 schematically illustrates the conventional infrared pointing type wireless controller, Fig. 2 illustrates a detail of the controller shown in Fig. 1, and Fig. 3 illustrates infrared sensors 21 ∼ 21-3 on four corners of a display screen 11.

That is, the conventional infrared pointing type wireless controller includes an infrared ray transmitting means 10 for transmitting infrared signals of a certain frequency, and a receiving/controlling means 20 for receiving the transmitted signals through' receiving sensors 21 to 21-3 arranged at different positions on the display screen, calculating coordinates of a pointed position according to difference of intensities of the infrared signals received through each of the receiving sensors 21 to 21-3, and matching the pointed position to the display screen 11.

The infrared ray transmitting means 10 includes a periodic pulse generator 12 for generating periodic pulses by turning on/off the switch SW, a carrier signal generator 13 for generating a carrier signal, a current amplifier 14 for overlap-amplifying the periodic pulses generated in the periodic pulse generating part 12 and the carrier signal generated in the carrier signal generating part 13, infrared-emitting diodes 15 each for emitting the signal amplified in the current amplifier 14 into air.

The receiving/controlling means 20 includes infrared ray receiving sensors 21 to 21-3 each arranged on the monitor screen for receiving the signal transmitted from the infrared ray transmitting means 10, amplifiers 22 to 22-3 each for amplifying the weak infrared signals from the infrared ray receiving sensors 21 to 21-3 again, envelope detectors 23 to 23-3 each for removing the carrier signal received in the amplifiers 22 to 22-3, and sensing a level of the light intensity received in the infrared ray receiving sensors 21 to 21-3, a multiplexer 24, a sample-and-hold 25 and an analog-to-digital converter 26 connected in series for conversion of each of the levels of the light intensity from the envelope detectors 23 to 23-3 to a digital data, a coordinate calculator 27 for receiving an output from the analog-to-digital converter 26 for calculating coordinates of the position on the display screen 11 pointed at the present time, a main processor 28 for matching the display screen 11 to the calculated coordinate axes for displaying the present pointed point on the display screen 11, and a control-logic part 29 for providing timings required for driving to different parts.

The infrared ray transmitting means 10 may be an infrared ray transmitter for pointing, such as a handset remote controller, and the receiving/controlling means 20 may be a system main body which is an objective of pointing by the handset remote controller.

In the conventional infrared pointing type wireless controller having the aforementioned system shown in Figs. 1 ∼ 3, upon shooting an infrared signal toward any position on the display screen having the infrared receiving sensors 21 to 21-3 mounted at four positions thereof by using the infrared transmitter 10, for example the handset remote controller, a light intensity received at each of the infrared receiving sensors 21 to 21-3 will be different.

That is, when the switch SW on the infrared ray transmitting means 10 is turned on, the periodic pulse generator 12 generates periodic pulses until the switch SW is turned off, and the periodic pulses are overlapped in the carrier signal generator 13 and applied to the current amplifier 14.

The current amplifier 14 amplifies current required for emitting the periodic pulses and the carrier signal into air, and an amplified signal is emitted into air by the infrared ray diodes 15.

The infrared signal transmitted into air is sensed by each of the infrared ray receiving sensors 21 to 21-3 in the receiving/controlling means 20, and the infrared signal, weakened in the course of receiving, are amplified again by the amplifiers 22 to 22-3.

The re-amplified infrared signals have the carrier signals removed by each of the envelope detectors 23 - 23-3, and are produced into levels of the infrared ray intensities of the infrared signals received at each of the infrared receiving sensors 21 to 21-3.

Accordingly, each of the levels of the infrared ray intensities is converted successively to digital data through the multiplexer 24, sample-and-hold 25 and analog-to-digital converter 26, which are then calculated into a coordinate position on the display screen 11 pointed at the present time by the coordinate calculator 27.

The coordinates calculated in the coordinate calculator 27 is entered into the main processor 28 for matching the display screen 11 and the calculated coordinates, and displaying the present point on the screen.

However, since the infrared ray transmitting portion is disposed in the handset remote controller, the foregoing conventional wireless controller generates the required carrier frequency signal and the remote control code in the handset remote controller itself and emits them by turning on/off the infrared ray emitting diodes 15. The great power consumption required in this process, particularly in case of two or more emitters, causes a problem that the dry cell for the handset should be replaced frequently.

### SUMMARY OF THE INVENTION

Accordingly, the present invention is directed to an infrared pointing type wireless controller that seeks to address one or more of the problems due to limitations and disadvantages of the related art.

It is desirable that embodiments of the present invention provide an Infrared pointing type wireless controller in which an infrared ray emitter is provided in a system main body for generation and transmission of a transmission carrier frequency signal and an infrared ray from the main body, and a handset remote controller, which is means for indicating a position, is adopted to controlling a liquid crystal display(hereinafter called; LCD) for blocking or passing the carrier frequency signal transmitted from the main body to generate a required code, so that the main body receives a signal reflected thrcugh the LCD in the handset remote controlling and determines a position pointed by the handset remote controller according to the intensity of the received signal, that makes the handset remote controller to drive only the LCD selectively, thereby to reduce the power consumption.

Additional features of these embodiments will be set forth in the description which follows, and in part will be apparent from the description, or may be learned by practice of the invention. The objectives and other advantages of these embodiments will be realized and attained by the structure particularly pointed out in the written description and claims hereof as well as the appended drawings.

In a currently preferred embodiments of the present invention, the infrared pointing type wireless controller includes a system main body which is an objective of pointing, having transmitting means for generating a carrier frequency signal for emitting an infrared ray, and receiving and controlling means for receiving a reflected carrier signal, and code signal, calculating coordinates of a pointed position according to a difference of intensities of received infrared signals, for matching the point to a display screen; and position indicating means with which pointing is performed, having re-transmitting means for passing or blocking reflection of the carrier frequency signal transmitted from the transmitting means for generating a required code, and overlapping the code with the carrier frequency signal and reflecting the overlapped signal.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the drawings:

In the drawings:
Fig. 1 schematically illustrates a block diagram of a conventional infrared pointing type wireless controller;
Fig. 2 illustrates a detail block diagram of Fig. 1;
Fig. 3 illustrates a conventional arrangement of infrared ray receiving sensors on a monitor screen;
Fig. 4 illustrates a perspective view of an arrangement of a main body of an infrared pointing type wireless controller embodying the present invention;
Fig. 5 illustrates an arrangement of a handset in embodying the the present invention;
Fig. 6 illustrates a block diagram of an infrared pointing type wireless controller embodying the present invention;
Figs. 7a to 7d illustrate waveforms at different parts of an infrared pointing type wireless controller embodying the present invention.

### DETAILED DESCRIPTION OF THE PREFERRED EMBODIMENT

Reference will now be made in detail to the preferred embodiments of the present invention, examples of which are illustrated in the accompanying drawings.

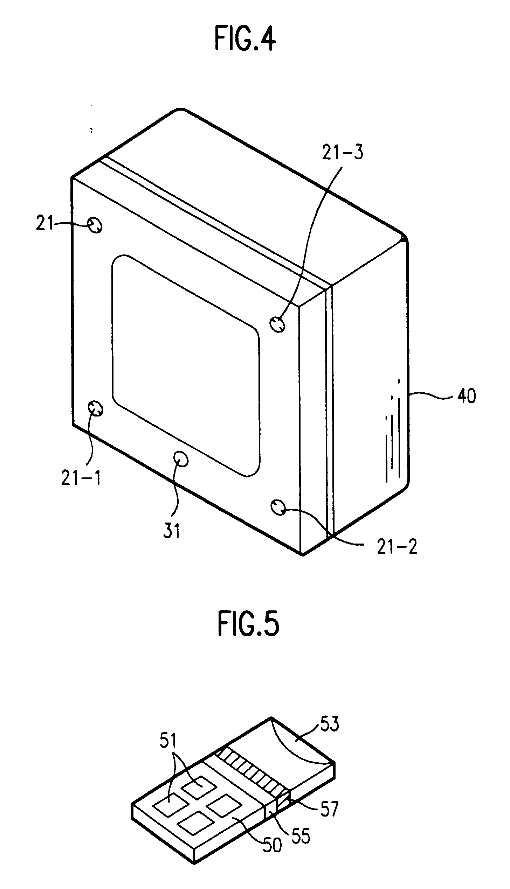

Fig. 4 illustrates a perspective view of an arrangement of a main body, which is an objective of pointing, of an infrared pointing type wireless controller embodying the present invention. A main body 40 therein includes one infrared ray transmitting part 31 and a plurality of infrared ray receiving sensors 21 ∼ 21-3. The number of infrared ray receiving sensors 21 ∼ 21-3 is decided according to function to be used actually, and four of the infrared receiving sensors 21 ∼ 21-3 will be used in this preferred embodiment of the present invention.

The main body is in general a set which can display, such as a TV set.

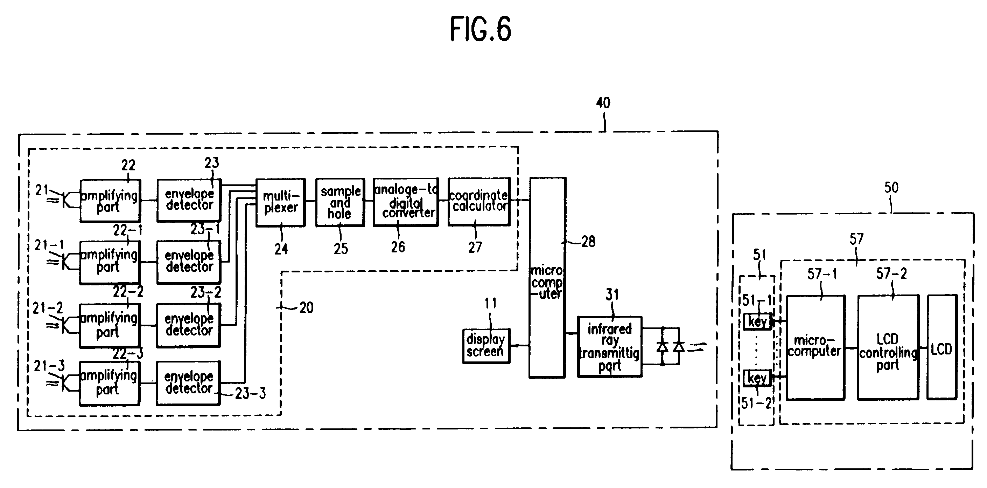

Fig. 5 illustrates an arrangement of a handset remote controller embodying the present invention. The handset remote controller includes a key applying part 51 having a plurality of keys for entering various required functions(for example, moving the cursor, selecting orders, operation orders and the like), a lens part 53 for focusing an infrared ray transmitted from the infrared ray transmitting part 31 in the main body 40 onto a reflector, a reflecting part 55 for reflecting the infrared ray focused on the reflector, and an LCD part 57 for blodking or passing the reflected infrared ray by means of electrical manipulation.

The lens part 53 may or may not be used as necessary; when there is a necessity for focusing the infrared ray onto the reflector of the reflecting part 55, the lens part 53 is added, and there is no such necessity, the lens part 53 may be removed.

As the reflecting part 55 is of a material which can reflect the infrared ray totally, a mirror is used in most cases. The LCD part 57 decides whether the Infrared ray reflected at the reflecting part 55 is transmitted again toward the main body 40 or blocked.

Fig. 6 illustrates a block diagram of the infrared pointing type wireless controller embodying the present invention. The infrared pointing type wireless controller includes the system main body 40 for generating and transmitting the carrier frequency signal at standby, receiving the carrier signal and code signal, reflected and coming back selectively, by the infrared ray receiving sensors 21 ∼ 21-3, calculating coordinates of a pointed position according to a difference of the intensities of the received infrared signals, for matching the point to the display screen 11; and a handset remote controller 50, which is means for indicating a position, for selective reflection of the carrier frequency signal transmitted from the main body 40 for generating a code for a remote controlling function.

The system main body 40 includes receiving and controlling means 20 for receiving the reflected carrier signal, and code signal and calculating coordinates of the pointed position, a microcomputer 28 for matching the calculated coordinates and the display screen 11 for displaying the present point on the screen, and an infrared ray transmitting part 31 for generating the carrier frequency signal under the control of the microcomputer 28 and transmitting an infrared ray through the infrared emitting diode.

The receiving and controlling means 20, of a system the same with the receiving/controlling means shown in Fig. 2, includes a plurality of infrared ray receiving sensors 21 to 21-3 each for receiving the carrier signal and the code signal reflected at the handset remote controller 50, amplifying parts 22 to 22-3 each for amplifying the weak infrared signals from the infrared ray receiving sensors 21 to 21-3 again, envelope detectors 23 to 23-3 each for removing the carrier signal received in the amplifying parts 22 to 22-3, and sensing a level of the light intensity received in the infrared ray receiving sensors 21 to 21-3, a multiplexer 24, a sample-and-hold 25 and an analog-to-digital converter 26 connected in series for conversion of each of the levels of the light intensity from the envelope detectors 23 to 23-3 to a digital data, and a coordinate calculator 27 for receiving an output from the analog-to-digital converter 26 for calculating coordinates of the position on the display screen 11 pointed at the present time.

Referring to Fig. 5, the handset remote controller 50 includes a key applying part 51, a lens part 53, a reflecting part 55 and an LCD part 57.

The LCD part 57 includes an LCD for blocking or passing reflection of the infrared ray, a microccmputer 57-1 for generating a control signal in response to a key signal (cursor movement, selecting orders, operation orders and the like) from the key applying part 51, and an LCD controlling part 57-2 for controlling turning on/off of the LCD for generating a code for a key signal.

The microcomputer 57-1 stores codes for different functions provided on the key applying part 51, and transmits a code for each of the functions to the LCD controlling part 57-2 for controlling shunting of the LCD, that controls the reflection of the signal.

In the infrared pointing type wireless controller having the aforementioned system, at standby of the system, a carrier frequency signal is generated in the infrared ray transmitting part 31 in the system main body 40, and an infrared ray is transmitted through the infrared emitting diode.

The lens part 53 in the handset remote controller 50 focuses the infrared ray transmitted from the main body 40 onto the reflecting part 55, and the reflecting part 55 reflects the infrared ray totally.

In this case, the infrared signal transmitted from the main body 40 only has the carrier signal, and does not contain a code signal for performing a certain function.

Therefore, when a certain function(for example, moving the cursor, selecting orders, operation orders and the like) is required, the user should enter a corresponding key(51-1, ---, 51-2) through the key applying part 51 on the handset remote controller 40.

Upon application of the corresponding key on the key applying part 51 for conducting a user desired function, the microcomputer 57-1 controls the LCD for generating a code meeting the function, which provides the same effect with an iris opening and shutting in a camera.

That is, as the handset remote controller 50 reflects the infrared ray transmitted from the main body 40 through the reflecting part 55, by blocking or passing reflection of the infrared ray through controlling on/off of the LCD using the LCD controlling part 57-2, the microcomputer 57-1 can generate a code meeting the corresponding function.

If no key is entered from the handset remote controller 40, the handset remote controller 40 reflects the carrier signal transmitted from the main body 40 as it is.

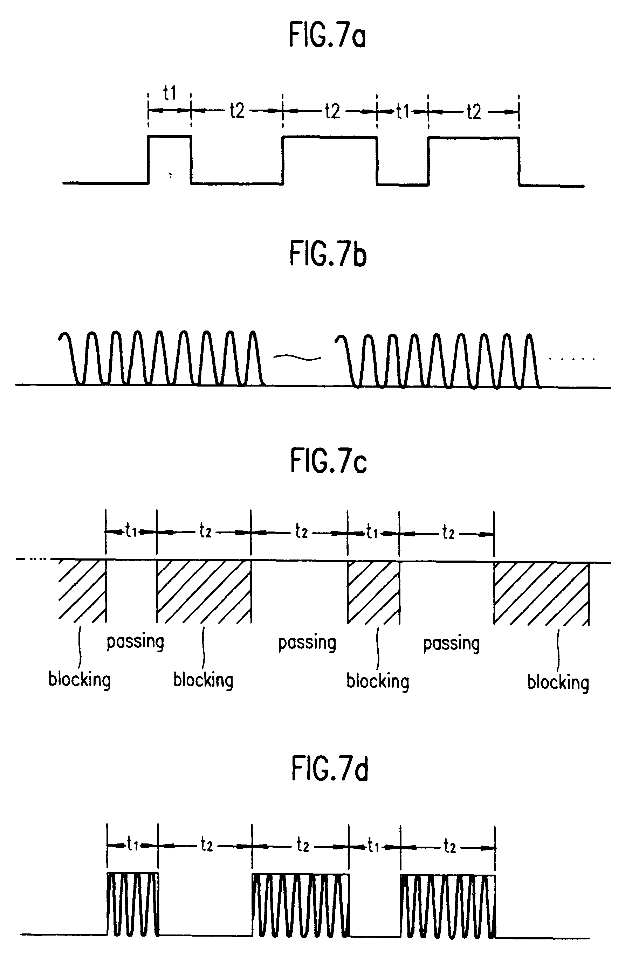

Accordingly, when the waveform shown in Fig. 7a is assumed to be a function code for conducting a certain function according to a key application on the key applying part 51, and the waveform shown in Fig. 7b is assumed to be an infrared ray transmitted from the main body 40, an infrared ray as shown in Fig. 7b is passed as shown in Fig. 7c in a high portion shown in Fig. 7a and blocked in a low portion under the control of the microcomputer 57-1 and the LCD controlling part 57-2, to thereby generate a desired code as shown in Fig. 7d.

That is, when the LCD is at a blocking state, as the infrared ray reflected at the reflecting part 55 can not pass the LCD, resulting that the receiving and controlling means 20 in the main body 40 can not receive the infrared ray, the low state shown in Fig. 7d becomes, and, when the LCD is at a passing state, as the infrared ray reflected at the reflecting part 55 is held for a desired duration, the code at a high state as shown in Fig. 7d can be generated.

At the passing state of the LCD in the handset remote controller 50, each of the infrared ray receiving sensors 21 to 21-3 of the receiving part 20 in the main body 40 receives an infrared ray having the carrier signal and the code signal overlapped, each of which rays are different from one another.

Since the infrared signal sensed by each of the infrared ray receiving sensors 21 to 21-3 is weak, each of the infrared signals is re-amplified in respective amplifying parts 22 to 22-3, and removed of the carrier signal in respective envelope detectors 23 to 23-3, and produced into a level for the intensity of light of the infrared ray received at respective infrared ray receiving sensors 21 to 21-3.

The levels for the intensity of lights of the infrared rays is converted into a digital value in succession through the multiplexer 24, sample and hold 25 and the A/D converter 26, and calculated into coordinates of a position on the display screen 11 pointed at the present time by the coordinate calculator 27. The coordinates of the position calculated by the coordinate calculator 27 is applied to the microcomputer 28 for matching the display screen 11 and the calculated position coordinates and displaying the present point on the screen.

In the meantime, the present invention is applicable, not only to the pointing type wireless controllers, but also to general existing remote controllers.

As has been explained, by adopting to generate and transmit a carrier signal from the main body, and adopting the handset to control reflection of the signal to produce a code for the signal and re-transmit the produced code to the main body, resulting the handset only to control operation of the LCD, the power consumption of the handset can be reduced approx. below 1 % compared to the conventional one. Therefore, the described emdodiment is very favorable to the handset remote controller that has a great burden of power consumption, such as the pointing type device.

As discussed, by devising the infrared ray transmitting part provided in the main body to generate and transmit a transmission carrier frequency signal, devising the handset remote controller to control the LCD to pass or block reflection of the carrier frequency signal for generating a required code and overlap the code with the carrier frequency signal and transmit the overlapped signal, and devising the main body to receive the signal reflected through the LCD in the handset remote controller, determine the position pointed by the handset remote controller according to the intensity of received signal, and move the cursor on the display screen to the determined position, resulting the handset remote controller only to operate the LCD selectively, the infrared pointing type wireless controller described facilitates reduction of the power consumption to the minimum.

It will be apparent to those skilled in the art that various modifications and variations can be made in method for fabricating the device described without departing from the scope of the invention. Thus, it is intended that the present invention cover the modifications and variations of this invention provided they come within the scope of the appended claims and their equivalents.

## Claims

1. An infrared pointing type wireless controller comprising:
a system main body which is an objective of pointing, including,
transmitting means for generating a carrier frequency signal for emitting an infrared ray, and
receiving and controlling means for receiving a reflected carrier signal and a reflected code signal, calculating coordinates of a pointed position according to a difference of intensities of received infrared signals, and matching the pointed position to a display screen; and,
position indicating means with which pointing is performed, including,
re-transmitting means for passing or blocking reflection of the carrier frequency signal transmitted from the transmitting means for generating a required code, and overlapping the code with the carrier frequency signal and reflecting the overlapped signal.

2. An infrared pointing type wireless controller as claimed in claim 1, wherein the receiving and controlling means includes,
a plurality of infrared ray receiving sensors each for receiving the carrier signal and the code signal reflected at the re-transmitting means,
a plurality of amplifying parts connected to the plurality of infrared ray receiving sensors respectively each for amplifying the weak infrared signal from the respective infrared ray receiving sensor,
a plurality of envelope detectors connected to the plurality of amplifying parts respectively each for removing the carrier signal received in the respective amplifying part, and sensing a level of the light intensity received in the respective infrared ray receiving sensor,
a multiplexer, a sample-and-hold and an analog-to-digital converter connected in series for conversion of each of the levels of the light intensities from the envelope detectors to a digital data,
a coordinate calculator for calculating an output from the analog/digital converter into coordinates of the position on the display screen pointed at the present time, and
a microcomputer for using the calculated coordinates in moving a point displayed on the display screen to the calculated coordinates, and controlling generation of the carrier frequency signal in the transmitting means.

3. An infrared pointing type wireless controller as claimed in claim 1, wherein the re-transmitting means includes,
a key applying part having a plurality of keys for entering various required functions,
a reflector for total reflection of an infrared carrier frequency signal transmitted from the transmitting means,
a liquid crystal display for blocking or passing the infrared ray reflected at the reflector for generating a required code, overlapping the code with the carrier frequency signal, and transmitting the overlapped signal,
a microcomputer in storage of codes for respective functions for generating a control signal for a code corresponding to a key signal from the key applying part, and
a liquid crystal display controller for turning on/off of the liquid crystal display under the control of the microcomputer.

4. An infrared pointing type wireless controller as claimed in claim 1 or 3, wherein a lens part is provided to the reflector when focusing of the infrared ray to the reflector is required.
